(19) 

Europäisches
Patentamt

European
Patent Office

Office européen
des brevets

(11) **EP 4 000 218 B1**

(12) **EUROPEAN PATENT SPECIFICATION**

(45) Date of publication and mention
of the grant of the patent:
**03.07.2024  Bulletin 2024/27**

(21) Application number: **20712841.4**

(22) Date of filing: **02.03.2020**

(51) International Patent Classification (IPC):
**H04L 9/00** *(2022.01)*    **H04L 9/32** *(2006.01)*
**H04L 9/40** *(2022.01)*    **G06F 21/64** *(2013.01)*

(52) Cooperative Patent Classification (CPC):
**H04L 9/3236; G06F 21/64; H04L 9/50;**
**H04L 63/0428; H04L 63/12**

(86) International application number:
**PCT/EP2020/055479**

(87) International publication number:
**WO 2021/175410 (10.09.2021 Gazette 2021/36)**

(54) **METHOD FOR SUPPORTING SHARING OF TRAVEL HISTORY OF TRAVELERS IN AIRPORTS**

VERFAHREN ZUR UNTERSTÜTZUNG DER GEMEINSAMEN NUTZUNG DER REISEHISTORIE
VON REISENDEN AN FLUGHÄFEN

PROCÉDÉ POUR PRENDRE EN CHARGE LE PARTAGE DE L'HISTORIQUE DE DÉPLACEMENT
DE VOYAGEURS DANS DES AÉROPORTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.05.2022  Bulletin 2022/21**

(73) Proprietor: **NEC Corporation**
**108-8001 Tokyo (JP)**

(72) Inventors:
• **ANDREINA, Sébastien**
**69115 Heidelberg (DE)**
• **KARAME, Ghassan**
**69115 Heidelberg (DE)**

(74) Representative: **Ullrich & Naumann PartG mbB**
**Schneidmühlstrasse 21**
**69115 Heidelberg (DE)**

(56) References cited:
**EP-A1- 3 496 332        WO-A1-2020/192948**
**US-A1- 2017 257 358**

• **WENTING LI ET AL: "Towards Scalable and
Private Industrial Blockchains", PROCEEDINGS
OF THE ACM WORKSHOP ON BLOCKCHAIN,
CRYPTOCURRENCIES AND CONTRACTS, 2
April 2017 (2017-04-02), pages 9-14,
XP055397747, DOI: 10.1145/3055518.3055531
ISBN: 978-1-4503-4974-1**

**Description**

The present invention relates to a method for supporting sharing of travel history of travelers in airports.

Airports are very complex systems through which millions of people travel every day. Their complexity has reached a point where a traveler can hardly understand what is going on behind the scenes. What seems a straightforward workflow - drop your luggage at check-in counter, go through metal detectors, board the plane, disembark, retrieve your luggage - is in reality made possible by many processes working in unison to make it all happen. One such process is identity management. Indeed, the identity of every passenger/traveler has to be verified in order to ensure that the traveler is not dangerous, and that the traveler really is who he claims to be. Therefore, at each checkpoint, the traveler has to show some valid ID (e.g., a passport), a valid ticket, and possibly a valid entry visa if the country of destination requires one (e.g., ESTA: Electronic System for Travel Authorization).

Thus, in recent years, many proposals aim at simplifying air travels by making it seamless for the passenger/traveler, and less error prone for the stakeholders. Examples of such proposals are OneID for aviation from IATA (further information is retrievable at https://www.iata.org/en/programs/passenger/one-id/), or the Know your Traveler Digital Identity (KTDI) initiative from the World Economic Forum (further information is retrievable at https://www.weforum.org/reports/the-known-traveller-unlocking-the-potential-of-digital-identity-for-secure-and-seamless-travel). Those solutions rely on the digitalization of the identity of the travelers to simplify data sharing and automatizing some of the air travel processes.

Patent EP3496332 shows a method for securely sharing validation information of one or more data files stored on different cloud servers using distributed ledger technology.

An aviation system encompasses many different stakeholders that do not necessarily trust each other; therefore, it is suitable to be enhanced using blockchain technology as a trustless data sharing platform. Blockchain provides trustless decentralized sharing of data and information for the stakeholders and self-sovereign identity management for the travelers. In a blockchain based seamless travel system, the use of the blockchain technology encompasses at least the identity verification and self-sovereign identity management. While additional information on the travel history and current status of the passenger might be wishful, it is not always possible to share it while preserving the privacy of the travelers.

Typically, the travel history of a traveler is of utmost importance for the immigration offices in order to allow them to judge the trustworthiness of the traveler. At the same time, this information contains a lot of personal information and should not be disclosed and available for everyone to access.

Thus, there is a need for providing trusted travel history to travelers in airports. A simple solution might be to openly store the travel history of each traveler on a common blockchain. However this would violate the travelers' privacy. This solution would still violate the privacy of the traveler even if the source and destination is to be stored encrypted, as the frequency of flights should remain personal information of each traveler and therefore not publicly accessible. Similarly, if the travel history simply has to be sent by the traveler, nothing prevents them from cherry picking the travels they want to share, therefore making the list untrustworthy. This approach has big drawbacks, namely lack of privacy and respectively possibility for travelers to tamper or selectively disclose the travel history. Furthermore, it would be possible for travelers to manipulate their travel history by registering multiple times with different accounts.

In view of the above, it is therefore an objective of the present invention to improve and further develop a method of the initially described type for supporting sharing of travel history of travelers in airports in such a way that the sharing of the travelers' travel history is improved, in particular in terms of enhancing security and increasing efficiency of the information sharing.

In accordance with the invention, the aforementioned object is accomplished by a method for supporting sharing of travel history of travelers in airports, wherein the travelers' identity is managed using a distributed ledger system, wherein the distributed ledger system includes a global identity blockchain and several per segment security blockchains, wherein the global identity blockchain is accessible by entities of the distributed ledger system, and wherein a per segment security blockchain is employed for a predetermined flight segment, such that the per segment security blockchain is accessible only by entities of the distributed ledger system that are involved in the predetermined flight segment, the method comprising the steps of:

a) generating a history secret of a traveler according to a resistance mechanism for resisting a creation of multiple identities, in particular a Sybil-resistance mechanism;
b) receiving, by the global identity blockchain, a registration request of the traveler, wherein the registration request comprises a commitment of the traveler's history secret, and wherein the global identity blockchain verifies the validity of the commitment;
c) receiving, by the per segment security blockchain, a ticket transaction that is issued by an airline entity, wherein the ticket transaction comprises information on the identity of the traveler and information on the time of journey;
d) recording, by the per segment security blockchain, a share travel history request from the traveler, wherein the share travel history request comprises a partial history secret, and wherein the per segment security blockchain verifies the validity of the partial history secret.

e) using, by an entity of the per segment security blockchain, the partial history secret to retrieve the travel history of the traveller; $

f) creating, by the per segment security blockchain, a flight report at the end of a flight to add said flight to the travel history of all travellers of said flight; $

g) employing a hash-chain, which is only extendible, for representing travel history updates of the traveller

According to the present invention, it has first been recognized that an enormous improvement with regard to an efficient and private sharing of travelers' travel history can be achieved by leveraging blockchain technology between main entities/participants of the air travel security. According to the invention, a distributed ledger system is used, wherein the distributed ledger system includes a global identity blockchain and several per segment security blockchains. The global identity blockchain is accessible by all entities/participants of the distributed ledger system. With regard to the per segment security blockchains, a per segment security blockchain is employed for a predetermined flight segment, wherein the per segment security blockchain is accessible only by entities that are involved in the predetermined flight segment. Taken this configuration into consideration, according to the invention, a history secret of a traveler is generated according to a resistance mechanism for resisting a creation of multiple identities, for example a Sybil-resistance mechanism. Then, the global identity blockchain can receive a registration request of the traveler, wherein the registration request comprises a commitment of the traveler's history secret. The global identity blockchain is configured to verify the validity of the commitment. The per segment security blockchain is configured to receive a ticket transaction that is issued by an airline entity, wherein the ticket transaction comprise information on the identity of the traveler and information on the time of journey. The the per segment security blockchain is further configured to record a share travel history request from the traveler, wherein the share travel history request comprises a partial history secret, and wherein the per segment security blockchain verifies the validity of the shared partial history secret. Thus, it may be provided that, for each travel, the traveler can share a partial history secret with the per segment security blockchain, which will allow different stakeholders to retrieve the travel history of the traveler and to be ensured that the traveler did not withhold any information.

Thus, the present invention provides a method for supporting sharing of travel history of travelers in airports, wherein the sharing of the travelers' travel history is improved, in particular in terms of enhancing security, privacy and increasing efficiency of the information sharing.

In particular, embodiments of the present invention provides Sybil resistance. The Sybil-resistance mechanism prevents travelers of registering different identities. For the travel history of a traveler, Sybil resistance is of utmost importance, otherwise travelers could discard their travel history by simply creating a new identity on the blockchain. According to embodiments of the invention, the use of a Sybil-resistance mechanism provides the guarantee that the travelers will always have the same history secret and therefore will be unable to discard their travel history by registering again. The history secret may be also designated as history key.

Thus, embodiments of the present invention provide a new method for ensuring private and integral sharing of travel history in existing blockchain technologies.

The term "travel history" is to be understood in the most general sense and refers in particular in the claims, preferably in the specification to information that represents all flights that a traveler has made. Thus, the travel history might include all the travel tickets of a traveler and/or at least corresponding information that may be derived from the travel tickets. However, it is to be mentioned that the travel history is not required to really have to contain a travel ticket per se, but more the travel history may include corresponding information about all the flights the traveler was on. By this, for example, it is meant that it may be provided that the travel history does not directly contain the username/lastname of the traveler as it would have in the case of a travel ticket per se.

The terms "entity", "airline entity", "airport entity" and "immigration office entity" refer in particular in the claims, preferably in the specification, each to a device adapted to perform computing like a personal computer, a tablet, a mobile phone, a server, or the like and comprises one or more processors having one or more cores and may be connectable to a memory for storing one or more applications which is/are adapted to perform corresponding steps of one or more of the embodiments of the present invention. Any application may be software-based and/or hardware-based installed in the memory on which the processor(s) can work on. The devices, entities or the like may be adapted in such a way that the corresponding steps to be computed are performed in an optimized way. For instance different steps may be performed in parallel with a single processor on different of its cores. Further the entities may be identical forming a single computing device. The device or devices may also be instantiated as a virtual device running on a physical computing resource. Different devices may therefore be executed on said physical computing resource. In other words the above mentioned terms of "entity" are each to be understood as any kind of physical or virtual computing entity or computing entities and may include, but are not limited to the following: an application running on a computer, a microprocessor, a single, dual, quad or octa-core processor or processors or the like or a computer, processor, or the like with a memory. Said application, computer or processor may have one or more interfaces, ports or the like for communication with other devices, entities, ports, interfaces or the like.

The term "transaction" is to be understood in the most general sense and refers in particular in the claims, preferably in the specification to information sent or transmitted into the network, e.g. to nodes connected to the node sending said transaction. Said transaction may be provided in form of a message, a data packet or the like and may comprise information for the recipients of said transaction.

The term "blockchain" may be understood, in particular in the claims, preferably in the description as a distributed database maintaining a continuously growing list of data records that are hardened against tampering and revision even by operators of the data storing nodes hosting database. A blockchain comprises for example two kinds of records: so-called transactions and so-called blocks. Transactions may be the actual data to be stored in the blockchain and blocks may be records confirming when and in what sequence certain transactions became journaled as a part of the blockchain database. Transactions may be created by participants and blocks may be created by users who may use specialized software or equipment designed specifically to create blocks.

According to embodiments, a per segment security blockchain may rely on the global identity blockchain for the management of the travelers' identity: travelers are only required to register once on the global identity blockchain. Then, e.g. upon a ticket registration transaction, a per segment security chain can retrieve the traveler's registration from the global identity blockchain in order to ensure that the traveler ID is a correct ID and to retrieve the public key of the traveler for further verification of traveler's signatures. Different per segment security chains may also exchange information through asset transfer, for example, as described in the non-patent literature of *Li, A. Sforzin, S. Fedorov and G. O. Karame, "Towards scalable and private industrial blockchains" in Proceedings of the ACM Workshop on Blockchain, Cryptocurrencies and Contracts, 2017.* Further, it may be provided that this can also be used to share data from a security chain to the global identity blockchain.

According to embodiments of the invention, it may be provided that the resistance mechanism of step a) employs a verifiable random function (VRF). Thus, Sybil attacks can be prevented. Verifiable random functions are a cryptographic primitive that takes as input a secret key and a seed, and outputs a random number along with a proof of correctness. Anyone can then verify that the random number has been generated properly using the correct secret key and the seed, by using the associated public key and verifying the proof of correctness. According to the embodiment, the history secret of a traveler can therefore be generated based on a verifiable random function, managed by a centralized trusted entity such as the airline entity/hub or an "immigration office entity" of a local government.

According to embodiments of the invention, the generation of the history secret according to step a) may be managed by a centralized trusted entity. For example, the trusted entity may be an airline entity/hub or an immigration office entity of a local government. Thus, trustworthiness may be provided with respect to the process of generating the history secret.

According to embodiments of the invention, it may be provided that, prior to step a), the traveler sends/provides personal identifying data to the trusted entity. For example, the personal identifying data may include a passport number, a date of birth and/or a name of the traveler, etc. Thus, in combination with the use of a verifiable random function (VRF), it can be enabled that even if a traveler tries to register a new identity, the traveler will not be able to change his history secret.

According to embodiments of the invention, it may be provided that the trusted entity returns the history secret and the commitment of the history secret back to the traveler. The commitment of the history secret may be used for issuing the registration request of the traveler. Thus, trusted travel history for the travelers can be ensured in a privacy preserving manner while providing data integrity as well as omission prevention, effectively allowing the travel history reported by the blockchain to be trusted.

According to embodiments of the invention, it may be provided that in step b) the global identity blockchain verifies the validity of the commitment by verifying that it has been signed by a trusted entity, in particular by an airline entity/hub or an immigration office entity of a local government. Thus, trusted travel history for the travelers can be ensured in a privacy preserving manner while providing data integrity as well as omission prevention, effectively allowing the travel history reported by the blockchain to be trusted.

According to embodiments of the invention, an entity of the per segment security blockchain may use the partial secret to retrieve the whole travel history of the traveler. Thus, the entity can perform a check in order to be convinced that a flight is neither omitted nor tampered.

According to embodiments of the invention, the per segment security blockchain may create a flight report at the end of a flight to add the flight to the travel history of all travelers of the flight. This shared travel history can then be retrieved by another per segment security blockchain, when the another per segment security blockchain records a share travel history request from a traveler.

According to embodiments of the invention, it may be provided that the travel history is created through flight reports. In this regard, it is to mentioned that the travel history does not necessarily require a root of a Merkle tree, however, in the context of another embodiment, the travel history may include a Merkle tree. For example, there may be possible embodiments as follows:

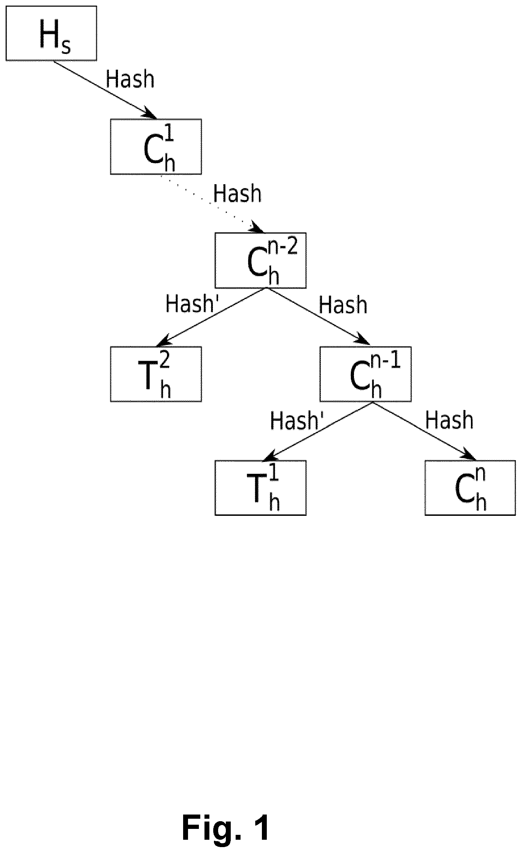

- The flight report puts for each key one flight value. Here the keys may be "travel keys" of each traveler, as e.g. shown in Fig. 1. It may be a hash of the partial secret shared by the traveler concatenated with a keyword such as, e.g., "travel". The advantage of these keys is that they are completely unlinkable, e.g. even though the keys $T_h^1, T_h^2$, ... of each traveler are published on the global identity blockchain, one cannot link them together, nor link them to the history secret commitment. Thus, for example, it might be a simple transaction that sets a flight instead of a Merkle tree.
- The flight report comprises the root of a Merkle tree for each traveler. This means that beforehand the airline uploaded travel tickets on the secure cloud storage of the travelers.

According to embodiments of the invention, it may be provided that the traveler grants access to a set of travel tickets of the traveler for an entity of the per segment security blockchain. Thus, the entities of the per segment security blockchain can gain access to a set of travel tickets from the travelers. Thus, the entities can perform a check in order to be convinced that a flight is neither omitted nor tampered with respect to the travel history.

According to embodiments of the invention, an entity of the per segment security blockchain may use the partial history secret to retrieve a Merkle tree of the traveler. Thus, it may be provided that the entities of the per segment security blockchain can use the given partial secret to retrieve the Merkle tree of each traveler. The entities of the per segment security blockchain can thus perform a check in order to be convinced that a flight is neither omitted nor tampered with respect to the travel history.

According to embodiments of the invention, the per segment security blockchain may create a flight report at the end of the flight to update the Merkle tree of the traveler by adding a new travel ticket for the flight to the Merkle tree of the traveler. Thus, the per segment security blockchain creates a flight report at the end of the flight to set the new Merkle tree of each traveler by adding to it the new travel ticket. This shared travel history can then be retrieved by another per segment security blockchain, when the another per segment security blockchain records a share travel history request from a traveler.

According to embodiments of the invention, a hash-chain that is only extendable may be employed for representing travel history updates of the traveler. Thus, in combination with the Sybil-resistance mechanism, a creation of a trusted and unlinkable travel history of a traveler is allowed, wherein the travel history can be shared on a need to know basis.

According to embodiments of the invention, it may be provided that an all-or-nothing travel history disclosure is ensured by using an extend only reversed hash-chain. Thus, more specifically, it may be provided that the traveler is unable to show only parts of his travel history.

According to embodiments of the invention, it may be provided that linkability of different travel events is prevented through an authenticated reverse hash-chain. Thus, it may be ensured that one cannot link the travels to a traveler or even to other travels of the traveler, hence, ensuring perfect privacy as even the frequency of the travels is hidden in this case. Furthermore, an entity gaining access to the travel history at some point in time does only knows of previous travels and does not gain any insight on travels happening at a later date.

According to embodiments of the invention, the global identity blockchain may record a flight report that is received from the per segment security blockchain. The per segment security blockchain issues the flight report. The flight report may comprise information on new flights for each of the traveler of the per segment security blockchain. Hence, all flights of the travelers may be stored in the global identity blockchain and, thus, it may be provided that the travel history of each traveler is available and retrievable, if required.

Embodiments of the invention may propose a way to ensure trusted travel history for the travelers in a privacy preserving manner while providing data integrity as well as omission prevention, effectively allowing the travel history reported by the blockchain to be trusted. The solution may be based on an extend only hash-chain that will represent the history updates of the travelers, and a Sybil-resistance mechanism to prevent travelers of registering different entities. The combination of both parts allows the creation of a trusted and unlinkable travel history that can be shared on a need to know basis.

Further features, advantages and further embodiments are described or may be become apparent in the following:

According to an embodiment, the distributed ledger system may be composed of a centralized airline hub and multiple blockchains. A blockchain is a peer-to-peer overlaid network that consists of multiple nodes/entities, which, through a distributed consensus protocol, collaboratively maintain a distributed ledger. The content of the ledger is replicated among all the nodes/entities of the distributed ledger system so that the blockchain network provides robustness against the corruption of some nodes.

Messages, which may also be designated as transactions, are propagated among the nodes of the distributed ledger system to update the state of the ledger. Nodes who actively maintain the ledger are denoted as validators, as they validate transactions and participate in the consensus process in order to update the ledger. The other nodes that simply passively get updates of the ledger are called non-validators.

According to an embodiment, the proposed method may be used along with a Digital Identity for Aviation based on blockchain deployment. Such a deployment has a goal to provide seamless travel for travelers and increased security for the different stakeholders. Indeed, in such a deployment, the traveler would be required to register only once into the system, after which, in the optimal case, travellers would not have to show their passport or boarding pass to any security check in any participating airport. Such solution usually uses some biometric identification, such as face recognition, to seamlessly identify the travelers, while the blockchain is used to share the data between the different stakeholders as well as ensure its authenticity and integrity.

Typically, the blockchain may store some information asserting that the identity of the traveler has been verified, i.e. his passport is valid, the face matches, etc. The main goals of such a deployment is to improve the user experience of the travelers, while reducing the costs of the stakeholders and increasing the security of the system.

It may be provided that such a deployment would include as a node of the blockchain every airport, airline and immigration office of the participating countries. The embodiment may use a blockchain technology that provides an architecture similar to Satellite Chains as described in the non-patent literature of Li, A. Sforzin, S. Fedorov and G. O. Karame, "Towards scalable and private industrial blockchains" in Proceedings of the ACM Workshop on Blockchain, Cryptocurrencies and Contracts, 2017.

A satellite chain architecture allows the creation of many distinct blockchains that comprise a possible different set of peers that are interoperable, i.e. cross chain transactions are possible. Furthermore, each blockchain may run its own consensus algorithm, effectively improving the scalability of the system. Those interoperable blockchains may be designated as satellite chains.

According to an embodiment of the invention, it may be provided that there are two types of satellite chains: a single unique global identity blockchain, and a multitude of per segment security chains. All entities participating in the Digital Identity for Aviation based on blockchain, i.e. the participating airlines, airports and immigration offices, would join this global identity blockchain. The global identity blockchain may be used to record information about the registration of the different users/travelers and is the base of the digital identity of the travelers. On the other hand, the per segment security blockchains would contain only the departure and arrival airports/governments as well as the airline of a given flight segment. A per segment security blockchain will record all the information regarding the passenger for the given flight. Those records may comprise, for example, the result of a prescreening from the immigration offices, or the current status of the passenger. The per segment security blockchain may be mainly used to handle and automatize the logic of the traveler/passenger management and which would reduce the possibility of human errors.

Since the global identity blockchain is the only chain that is accessible to everyone, it is where the travel history of the traveler is to be shared. However, since the global identity blockchain may be accessed by many different entities, it is important that the information shared is completely confidential to everyone except for the parties with whom the traveler has disclosed it.

Given that the history of the traveler is linked to his registration, it is important to prevent the traveler registering many accounts and fly only once with each account, in order to prevent the population of his travel history.

Therefore, to prevent a Sybil attack (i.e., for instance, an attack wherein a reputation system is subverted by creating multiple identities), embodiments of the invention makes use of verifiable random functions. Verifiable random functions are a cryptographic primitive that takes as input a secret key and a seed, and outputs a random number along with a proof of correctness. Anyone can then verify that the random number has been generated properly using the correct secret key and the seed, by using the associated public key and verifying the proof of correctness. The history key of a user will therefore be generated based on a verifiable random function, managed by a centralized entity such as the airline Hub or a local government.

Thus, embodiments of the invention provides a solution to the problem of creating a trusted history in the Digital Identity for Airline use case. The embodiments may provide an improvement with respect to complexity and trust requirement compared to the prior art. Embodiments of the invention may allow the traveler to either not show his history, or show it completely, as if anything is missing, it will be directly rejected by the receiving entity, effectively achieving an All or Nothing travel history.

Furthermore, at least one embodiment of the invention may have at least one of the following advantages:

- Preventing sibyl attacks during ID creation by using encryption with a deterministic public key schema.
- Ensuring all-or-nothing travel history disclosure by storing Merkle root of off-chain authenticated Merkle trees.
- Preventing linkability of different travel events by applying reverse hash chain authenticated trees.
- Allowing efficient information sharing without any key management required.
- Offer high privacy to travelers through anonymity, and third parties that gain access to the information are able to be convinced that the travelers did not omit some of the data nor tampered with some of them.

- Applied to the blockchain based Seamless Travel for Airports, it is allowed to record securely and confidentially the travel history of the travelers while ensuring that upon granted access to the travel history, the different parties can be convinced of the integrity and validity of the travel history.
- Improving the security and the privacy of Blockchain based OneID for airport, effectively enabling seamless travel experience for passengers while tightening security.

Embodiments of the invention may provide an information sharing process based on blockchain that would allow to record series of events about a traveler in a privacy preserving way: the different events are completely unlinkable unless the traveler shares a partial secret, revealing all the transactions recorded under his name. Furthermore, the traveler is only able to either refuse the sharing or share the full set of transactions: any attempt at hiding or tampering with some of the transactions will be directly detected by the verifier entity. The process may also preserve the future privacy of the travelers, as even if a traveler agreed to share a partial secret with a third party, new transactions will become again confidential and unlinkable even to this third party.

There are several ways how to design and further develop the teaching of the present invention in an advantageous way. To this end it is to be referred to the patent claims subordinate to patent claim 1 on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

In the drawing

Fig. 1 is a schematic view illustrating a hash chain for a method in accordance with an embodiment of the present invention.

Fig. 1 shows a schematic view illustrating a hash chain for a method in accordance with an embodiment of the present invention. In particular, Fig. 1 illustrates how the hash chain is constructed and how it preserves privacy for future travels, where hash is a normal hash function and hash' is either a different hash function or a hash function with some concatenated string.

The embodiment corresponding to the example of Fig. 1 provides a method for supporting sharing of travel history of travelers in airports. In what follows, it is first described system components for a method in accordance with the embodiment of the invention, then the generation step of the travelers history secrets/keys and its Sybil resistance property followed by how the travel history of a traveler is created and populated and how it can be shared with third parties.

*Traveler Application*

According to an embodiment, a traveler software application may be provided. The traveler application, deployable in mobile devices, may act as the traveler's interface to the distributed ledger system, allowing him to register to the system, book flights, query the status of his travel, show notifications about important updates regarding his travel and more importantly: to share his travel history. Upon installation of the traveler application a unique public key/secret key pair ($pk$, $sk$) may be generated that from now identifies the traveler in the distributed ledger system is generated. Furthermore, the traveler software application generates the history secret and its linked commitment ($h_s$, $C_h^n$). The application additionally keeps track of a counter $_{ctr}$, initialized at 1 at the beginning. The history secret $h_s$ may be generated and received by a trusted entity such as the airline hub/entity.

*Global Identity Blockchain*

The global identity blockchain, or identity chain, is the main system's chain. Its purpose is to record information about travelers. In particular, it records in the shared ledger the public key of the traveler and the commitment $C_h^n$ of the traveler's history secret. The registration of the public key may create an account on which the travel history of the traveler can be shared. The commitment of the history secret ensures that the traveler does not change his history secret. Every actor in the distributed ledger system has access to this global identity blockchain, with travelers being light client able to query and receive notifications.

For each travel, the traveler shares a partial history secret with the per segment security blockchain that will allow the different stakeholders to retrieve the history of the traveler and to be ensured that the traveler did not withhold any information.

According to the embodiment of Fig. 1, a protocol may be implemented, wherein the protocol may have steps as follows:

*i) Generate history secret*

An airline entity/hub functioning as trusted entity has a master secret key that it will use to help travelers to generate their history secret. The history secret will then be generated according to the following setup: the travelers first send some personal identifying data to the airline entity, such as the passport number, or first name last name, etc. The information is then converted into a byte array through a hash function before being input into a verifiable random function (VRF). The output of the verifiable random function is then used as the seed for the history secret generation. The airline entity can then generate the history secret through either some key derivation function (KDF) or simply a hash function to generate $h_s$. The commitment $C_h^n$ is then generated by iteratively hashing the history secret $n$ times. The airline entity can then return ($h_s$, $C_h^n$) back to the traveler along with a signature of the commitment using its secret key and the public key of the traveler. The traveler can then use this information in the history secret registration step. Algorithm 1 depicts the key generation process. This process provides Sibyl resistance as the output of the VRF is always the same given the same input. Therefore, even if a traveler tries to register a new identity, the traveler will not be able to change his history secret.

---

**Algorithm 1** Generate History Secret

---

1: **parameter** $n, master\_key, secret\_key$
2: **function** GENERATE SECRET($personal\_data$)
3: $\quad randomness \leftarrow VRF_{master\_key}(personal\_data)$
4: $\quad h_s \leftarrow KDF(randomness)$
5: $\quad C_h \leftarrow h_s$
6: $\quad$ **for** $i$ **in** $[1\ldots n]$ **do**
7: $\qquad C_h \leftarrow hash(C_h)$
8: $\quad$ **end for**
9: $\quad C_h^n = C_h$
10: $\quad Sig \leftarrow ECDSA.sign_{secret\_key}(C_h^n)$
11: $\quad$ **Return** $h_s, C_h^n, sig$
12: **end function**

---

*ii) Register history secret*

$$< C_h^n \mid sig_{hub} \mid sig >$$

where $C_h^n$ is the commitment of the history secret $h_s$ and *sig* is the traveler's digital signature that provides authenticity and integrity of the previous field. The traveler application creates this transaction during the Registration step and broadcasts it to the global identity blockchain. The commitment $C_h^n$ is computed from the secret $h_s$ as displayed in Algorithm 1. This process is done on the mobile application of the travelers. Furthermore, the transaction contains $ig_{hub}$ , a signature from the airline hub used to certify the correctness of the commitment.

*iii) Share Travel History*

$$< C_h^{n-ctr} \,|\, ctr \,|\, sig >$$

where $C_h^{n-ctr}$ is the partial history secret and is computed by hashing the history secret $n$ - $ctr$ times, $ctr$ is a counter that represents the number of time one has to hash the received partial secret $C_h^{n-ctr}$ in order to retrieve the committed history secret $C_h^n$. This transaction is sent to a smart contract on the per segment security blockchain. Upon reception of this transaction, the smart contract automatically recomputes the value $C_h^n$ based on ( $C_h^{n-ctr}$, $ctr$) and verifies that the result is indeed the same as the one stored on the global identity blockchain. It further verifies that

$$T_h^{ctr} \leftarrow hash(C_h^{n-ctr}, \text{"travel"})$$

is not a valid key, as otherwise it means there might be some more recent flights that have not been disclosed. If either verification fails, then the transaction is rejected, and it is assumed that the traveler is either concealing part of his history or using the wrong secret. More information on how retrieve the travel history is explained in the *Get Travel History* request. The exact process of the creation of $C_h^{n-ctr}$ is illustrated in Algorithm 2. This process is done on the mobile application of the traveler, and the transaction is sent to the relevant per segment security blockchain, as it contains all the different stakeholders that requires this knowledge (i.e. the airline, the immigrations and the airports).

---

**Algorithm 2** Share History Secret

---

1: **parameter** $n$
2: **function** EXTRACT PARTIAL SECRET($h_s, ctr$)
3:      $C_h \leftarrow h_s$
4:      $ctr = ctr + 1$
5:      **for** $i$ **in** $[1 \dots (n - ctr)]$ **do**
6:          $C_h \leftarrow hash(C_h)$
7:      **end for**
8:      $C_h^{n-ctr} = C_h$
9:      **Return** $C_h^{n-ctr}, ctr$
10: **end function**

---

*iv) Travel Report*

In order to build the travel history, at the end of each travel, the per segment security blockchain creates a travel report that is then registered on the global identity blockchain. As shown in Algorithm 3, the travel report is built by retrieving the shared secret of each passenger and hashing it with the keyword "*travel*" in order to create the travel commitment $T_h^{ctr}$, and storing them on the blockchain as passenger being parts of this flight. For privacy reasons, the flight does not contain the list of passenger but only the list of hashed secret. The flight report creation happens on the per segment security blockchain as it is where the data of the flight is stored. Once the flight record is created, it needs to be sent to the global identity blockchain and call the function Record Flight Report, also depicted in Algorithm 3.

---

**Algorithm 3** Flight Report

---

1: **function** CREATE FLIGHT REPORT($passenger\_list$)
2:     $report \leftarrow new\ List$
3:     **for** $passenger$ **in** $passenger\_list$ **do**
4:         $C_h, ctr \leftarrow passenger.GetSecret()$
5:         $T_h^{ctr} \leftarrow hash(C_h|"travel")$
6:         $report.Add(t_h^{ctr})$
7:     **end for**
8:     $flightreport \leftarrow \{report, departure\_country, arrival\_country, date\}$
9:     **Return** $flightreport$
10: **end function**

11: **function** RECORD FLIGHT REPORT($flightreport$)
12:     $report, departure, arrival, date \leftarrow flightreport$
13:     $id \leftarrow string.RandomID$
14:     $RecordState(key = id,\ value = flightreport)$
15:     **for** $hash$ **in** $report$ **do**
16:         $RecordState(key = hash,\ value = id)$
17:     **end for**
18: **end function**

---

As a malicious party could try to report fake information, the finality proof may be generated as described in the non-patent literature of Li, A. Sforzin, S. Fedorov and G. O. Karame, "Towards scalable and private industrial blockchains" in Proceedings of the ACM Workshop on Blockchain, Cryptocurrencies and Contracts, 2017, so that the global identity blockchain can be ensured of the veracity of the flight report by verifying the correctness of the proof. A valid proof ensures the global identity blockchain that the majority of the entities of the per segment security blockchain that generated the flight report agrees on its validity.

*v) Get Travel History*

Once the traveler shares his travel history, any registered entity from the per segment security blockchain can do a request to get the travel history. Algorithm 4 shows in details how one can rebuild the whole travel history based on the partial secret given by the traveler: for each step of the counter, the partial secret is first hashed with the keyword "travel" to retrieve on flight history, before being hashed again.

---

**Algorithm 4** Get Travel History

---

1: **function** GET TRAVEL HISTORY($passenger$)
2:     $C_h^{n-ctr}, ctr \leftarrow passenger.GetSecret()$
3:     $travel\_history \leftarrow new\ List$
4:     $C_h \leftarrow C_h^{n-ctr}$
5:     **for** $i$ **in** $[0 \dots ctr - 1]$ **do**
6:         $T_h^{ctr-i} \leftarrow hash(C_h|"travel")$
7:         $id \leftarrow GetState(key = T_h^{ctr-i})$
8:         $travel \leftarrow GetState(key = id)$
9:         $travel\_history.Add(travel)$
10:         $C_h \leftarrow hash(C_h)$
11:     **end for**
12:     **Return** $travel\_history$
13: **end function**

---

Since upon reception of the shared partial secret ( $C_h^{n-ctr}$ , ctr), a third party first verifies that $T_h^{ctr} \leftarrow hash(C_h^{n-ctr}, "travel")$ is not a valid key and that the value $C_h^n$ based on ( $C_h^{n-ctr}$ , ctr) is the same as the one committed on the blockchain, the third party can be ensured of the integrity of the travel history as well as the fact that no travel is missing. At the end of the new travel, this third party can share the new travel using the $T_h^{ctr}$ . Fig. 1 depicts the hash chain and how the travel commitments $T_h^{ctr}$ are generated using the value of $C_h^{n-ctr}$ . A third party gaining access to the value of $C_h^{n-ctr}$ is only able to see the travels $T_h^1 \dots T_h^{ctr}$ , but it is unable to even decide on the existence of travel $T_h^{ctr+1}$ as this would require knowledge of $C_h^{n-ctr-1}$ , which is computationally impossible to retrieve based on $C_h^{n-ctr}$ . Therefore, when a traveler shares his travel history with an immigration office, the immigration office can go through the whole travel history of the traveler, but it will be unable to detect future travels, effectively protecting the privacy of the travelers. In order to improve the database access efficiency, instead of storing a travel against each $T_h^i$ one could instead store a Merkle tree of all the travel tickets of the traveler. For each new travel, the Merkle tree would simply add a new entry and the new hash would be stored again on the blockchain using $T_h^{i+1}$ . This would result in a single database query for each traveler. The tickets would then be downloaded from the appropriated cloud storage.

Thus, the embodiment of Fig. 1 provide a solution to the problem of creating a trusted history in the Digital Identity for Airline use case. The embodiment provides high privacy to the traveler and his travel frequency is hidden. In this embodiment, there is a need to store one key for each travel of the travelers. The embodiment allows the traveler to either not show his history, or show it completely, as if anything is missing, it will be directly rejected by the receiving entity, effectively achieving an All or Nothing travel history.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method for supporting sharing of travel history of travelers in airports, wherein the travelers' identity is managed using a distributed ledger system,

   wherein the distributed ledger system includes a global identity blockchain and several per segment security blockchains,
   wherein the global identity blockchain is accessible by entities of the distributed ledger system, and
   wherein a per segment security blockchain is employed for a predetermined flight segment, such that the per segment security blockchain is accessible only by entities of the distributed ledger system that are involved in the predetermined flight segment,

   the method comprising the steps of:

   a) generating a history secret of a traveler according to a resistance mechanism for resisting a creation of multiple identities, in particular a Sybil-resistance mechanism;
   b) receiving, by the global identity blockchain, a registration request of the traveler, wherein the registration request comprises a commitment of the traveler's history secret, and wherein the global identity blockchain verifies the validity of the commitment;
   c) receiving, by the per segment security blockchain, a ticket transaction that is issued by an airline entity, wherein the ticket transaction comprises information on the identity of the traveler and information on the time of journey;

d) recording, by the per segment security blockchain, a share travel history request from the traveler, wherein the share travel history request comprises a partial history secret, and wherein the per segment security blockchain verifies the validity of the partial history secret;

e) using, by an entity of the per segment security blockchain, the partial history secret to retrieve the travel history of the traveler;

f) creating, by the per segment security blockchain, a flight report at the end of a flight to add said flight to the travel history of all travelers of said flight;

g) employing a hash-chain, which is only extendable, for representing travel history updates of the traveler.

2. The method according to claim 1, wherein the resistance mechanism of step a) employs a verifiable random function.

3. The method according to claim 1 or 2, wherein said generating the history secret according to step a) is managed by a trusted entity, in particular by an airline entity or an immigration office entity of a local government.

4. The method according to any of claims 1 to 3, wherein prior to step a) the traveler sends personal identifying data to the trusted entity.

5. The method according to claim 4, wherein the personal identifying data includes a passport number, a date of birth and/or a name of the traveler.

6. The method according to any of claims 3 to 5, wherein the trusted entity returns the history secret and the commitment of the history secret back to the traveler.

7. The method according to any of claims 1 to 6, wherein in step b) the global identity blockchain verifies the validity of the commitment by verifying that it has been signed by a trusted entity, in particular by an airline entity or an immigration office entity of a local government.

8. The method according to any of claims 1 to 7, wherein the method further comprises:
granting, by the traveler, access to a set of travel tickets of the traveler for an entity of the per segment security blockchain.

9. The method according to any of claims 1 to 8, wherein the method further comprises:
using, by an entity of the per segment security blockchain, the partial history secret to retrieve a Merkle tree of the traveler.

10. The method according to claim 9, wherein the method further comprises:
creating, by the per segment security blockchain, a flight report at the end of the flight to update the Merkle tree of the traveler by adding a new travel ticket for the flight to the Merkle tree of the traveler.

11. The method according to any of claims 1 to 10, wherein an all-or-nothing travel history disclosure is provided by using an extend only reversed hash-chain, and/or
wherein linkability of different travel events is prevented by an authenticated reverse hash-chain.

12. The method according to any of claims 1 to 11, wherein the method further comprises:
recording, by the global identity blockchain, a flight report that is received from the per segment security blockchain, wherein the flight report comprises information on new flights for each of the travelers of the per segment security blockchain.

**Patentansprüche**

1. Verfahren zur Unterstützung der gemeinsamen Nutzung des Reiseverlaufs von Reisenden in Flughäfen, wobei die Identität der Reisenden unter Verwendung eines verteilten Ledger-Systems verwaltet wird,

wobei das verteilte Ledger-System eine globale Identitäts-Blockchain und mehrere segmentbezogene Sicherheits-Blockchains umfasst,

wobei die globale Identitäts-Blockchain für Entitäten des verteilten Ledger-Systems zugänglich ist, und wobei eine segmentbezogene Sicherheits-Blockchain für ein vorbestimmtes Flugsegment derart verwendet wird, dass die segmentbezogene Sicherheits-Blockchain nur für Entitäten des verteilten Ledger-Systems zugänglich ist, die an dem vorbestimmten Flugsegment beteiligt sind,

wobei das Verfahren die folgenden Schritte umfasst:

a) Erzeugen eines Verlaufsgeheimnisses eines Reisenden gemäß einem Widerstandsmechanismus zum Widerstehen einer Erzeugung von Mehrfachidentitäten, insbesondere einem Sybil-Widerstandsmechanismus;
b) Empfangen einer Registrierungsanfrage des Reisenden durch die globale Identitäts-Blockchain, wobei die Registrierungsanfrage ein Commitment des Verlaufsgeheimnisses des Reisenden umfasst, und wobei die globale Identitäts-Blockchain die Gültigkeit des Commitments verifiziert;
c) Empfangen einer von einer Fluggesellschaft ausgestellten Ticket-Transaktion durch die segmentbezogene Sicherheits-Blockchain, wobei die Ticket-Transaktion Informationen über die Identität des Reisenden und Informationen über den Zeitpunkt der Reise umfasst;
d) Aufzeichnen, durch die segmentbezogene Sicherheits-Blockchain, einer Anfrage zur gemeinsamen Nutzung des Reiseverlaufs von dem Reisenden, wobei die Anfrage zur gemeinsamen Nutzung des Reiseverlaufs ein Teilverlaufsgeheimnis umfasst und wobei die segmentbezogene Sicherheits-Blockchain die Gültigkeit des Teilverlaufsgeheimnisses verifiziert;
e) Verwenden des Teilverlaufsgeheimnisses durch eine Entität der segmentbezogenen Sicherheits-Blockchain, um den Reiseverlauf des Reisenden abzurufen;
f) Erstellen eines Flugberichts durch die segmentbezogene Sicherheits-Blockchain am Ende eines Fluges, um den Flug zum Reiseverlauf aller Reisenden des Fluges hinzuzufügen;
g) Verwendung einer Hash-Chain, die nur erweiterbar ist, um Aktualisierungen des Reiseverlaufs des Reisenden darzustellen.

2. Verfahren nach Anspruch 1, wobei der Widerstandsmechanismus von Schritt a) eine verifizierbare Zufallsfunktion verwendet.

3. Verfahren nach Anspruch 1 oder 2, wobei das Erzeugen des Verlaufsgeheimnisses gemäß Schritt a) von einer vertrauenswürdigen Stelle, insbesondere von einer Fluggesellschaft oder einer Einwanderungsbehörde einer lokalen Regierung, verwaltet wird.

4. Verfahren nach einem der Ansprüche 1 bis 3, wobei der Reisende vor dem Schritt a) persönliche Identifikationsdaten an die vertrauenswürdige Stelle sendet.

5. Verfahren nach Anspruch 4, wobei die persönlichen Identifikationsdaten eine Reisepassnummer, ein Geburtsdatum und/oder einen Namen des Reisenden umfassen.

6. Verfahren nach einem der Ansprüche 3 bis 5, wobei die vertrauenswürdige Stelle das Verlaufsgeheimnis und das Commitment des Verlaufsgeheimnisses an den Reisenden zurückgibt.

7. Verfahren nach einem der Ansprüche 1 bis 6, wobei in Schritt b) die globale Identitäts-Blockchain die Gültigkeit des Commitments verifiziert, indem sie verifiziert, dass sie von einer vertrauenswürdigen Instanz, insbesondere von einer Fluggesellschaft oder einer Einwanderungsbehörde einer lokalen Regierung, unterzeichnet wurde.

8. Verfahren nach einem der Ansprüche 1 bis 7, wobei das Verfahren weiterhin umfasst:
Gewähren des Zugriffs auf einen Satz von Reisetickets des Reisenden für eine Entität der segmentbezogenen Sicherheits-Blockchain durch den Reisenden.

9. Verfahren nach einem der Ansprüche 1 bis 8, wobei das Verfahren weiterhin umfasst:
Verwenden des Teilverlaufsgeheimnisses durch eine Entität der segmentbezogenen Sicherheits-Blockchain, um einen Merkle-Baum des Reisenden abzurufen.

10. Verfahren nach Anspruch 9, wobei das Verfahren weiterhin umfasst:
Erstellen eines Flugberichts durch die segmentbezogene Sicherheits-Blockchain am Ende des Fluges, um den Merkle-Baum des Reisenden zu aktualisieren, indem ein neues Reiseticket für den Flug zum Merkle-Baum des Reisenden hinzugefügt wird.

11. Verfahren nach einem der Ansprüche 1 bis 10, wobei eine Alles-oder-Nichts-Offenlegung des Reiseverlaufs durch Verwendung einer nur erweiterbaren umgekehrten Hash-Chain bereitgestellt wird, und/oder
wobei die Verknüpfbarkeit verschiedener Reiseereignisse durch eine authentifizierte umgekehrte Hash-Kette verhindert wird.

12. Verfahren nach einem der Ansprüche 1 bis 11, wobei das Verfahren weiterhin umfasst:
Aufzeichnen eines Flugberichts, der von der segmentbezogenen Sicherheits-Blockchain empfangen wird, durch die globale Identitäts-Blockchain, wobei der Flugbericht Informationen über neue Flüge für jeden der Reisenden der segmentbezogenen Sicherheits-Blockchain umfasst.

**Revendications**

1. Procédé pour prendre en charge le partage d'un historique de déplacement de voyageurs dans des aéroports, dans lequel l'identité des voyageurs est gérée en utilisant un système de registre distribué,

dans lequel le système de registre distribué comprend une chaîne de blocs d'identité globale et plusieurs chaînes de blocs de sécurité par segment,
dans lequel la chaîne de blocs d'identité globale est accessible par des entités du système de registre distribué, et
dans lequel une chaîne de blocs de sécurité par segment est employée pour un segment de vol prédéterminé, de manière que la chaîne de blocs de sécurité par segment soit accessible uniquement par des entités du système de registre distribué qui sont impliquées dans le segment de vol prédéterminé,
le procédé comprenant les étapes suivantes :

a) la génération d'un secret d'historique d'un voyageur selon un mécanisme de lutte contre les attaques pour lutter contre une création d'identités multiples, en particulier un mécanisme de lutte contre les attaques Sybil ;
b) la réception, par la chaîne de blocs d'identité globale, d'une demande d'enregistrement du voyageur, dans lequel la demande d'enregistrement comprend un engagement du secret d'historique du voyageur, et dans lequel la chaîne de blocs d'identité globale vérifie la validité de l'engagement ;
c) la réception, par la chaîne de blocs de sécurité par segment, d'une transaction de billet qui est émise par une entité de compagnie aérienne, dans lequel la transaction de billet comprend des informations sur l'identité du voyageur et des informations sur le temps de voyage ;
d) l'enregistrement, par la chaîne de blocs de sécurité par segment, d'une demande d'historique de déplacement de partage provenant du voyageur, dans lequel la demande d'historique de déplacement de partage comprend un secret d'historique partiel, et dans lequel la chaîne de blocs de sécurité par segment vérifie la validité du secret d'historique partiel ;
e) l'utilisation, par une entité de la chaîne de blocs de sécurité par segment, du secret d'historique partiel pour récupérer l'historique de déplacement du voyageur ;
f) la création, par la chaîne de blocs de sécurité par segment, d'un rapport de vol à la fin d'un vol à ajouter ledit vol à l'historique de déplacement de tous les voyageurs dudit vol ;
g) l'emploi d'une chaîne de hachage, qui est seulement extensible, pour représenter des mises à jour d'historique de déplacement du voyageur.

2. Procédé selon la revendication 1, dans lequel le mécanisme de lutte contre les attaques de l'étape a) emploie une fonction aléatoire vérifiable.

3. Procédé selon la revendication 1 ou 2, dans lequel ladite génération du secret d'historique selon l'étape a) est gérée par une entité de confiance, en particulier par une entité de compagnie aérienne ou une entité de bureau d'immigration d'un gouvernement local.

4. Procédé selon l'une quelconque des revendications 1 à 3, dans lequel, avant l'étape a), le voyageur envoie des données d'identification personnelles à l'entité de confiance.

5. Procédé selon la revendication 4, dans lequel les données d'identification personnelles comprennent un numéro de passeport, une date de naissance et/ou un nom du voyageur.

6. Procédé selon l'une quelconque des revendications 3 à 5, dans lequel l'entité de confiance renvoie le secret d'historique et l'engagement du secret d'historique au voyageur.

7. Procédé selon l'une quelconque des revendications 1 à 6, dans lequel, dans l'étape b), la chaîne de blocs d'identité globale vérifie la validité de l'engagement en vérifiant qu'il a été signé par une entité de confiance, en particulier par une entité de compagnie aérienne ou une entité de bureau d'immigration d'un gouvernement local.

8. Procédé selon l'une quelconque des revendications 1 à 7, dans lequel le procédé comprend en outre :
l'autorisation, par le voyageur, de l'accès à un ensemble de billets de voyage du voyageur pour une entité de la chaîne de blocs de sécurité par segment.

9. Procédé selon l'une quelconque des revendications 1 à 8, dans lequel le procédé comprend en outre :
l'utilisation, par une entité de la chaîne de blocs de sécurité par segment, du secret d'historique partiel pour récupérer un arbre de Merkle du voyageur.

10. Procédé selon la revendication 9, dans lequel le procédé comprend en outre :
la création, par la chaîne de blocs de sécurité par segment, d'un rapport de vol à la fin du vol pour mettre à jour l'arbre de Merkle du voyageur en ajoutant un nouveau billet de voyage pour le vol à l'arbre de Merkle du voyageur.

11. Procédé selon l'une quelconque des revendications 1 à 10, dans lequel une divulgation d'historique de déplacement de tout ou rien est fournie en utilisant une chaîne de hachage inversée seulement d'extension, et/ou
dans lequel une possibilité de liaison de différents événements de déplacement est empêchée par une chaîne de hachage inversée authentifiée.

12. Procédé selon l'une quelconque des revendications 1 à 11, dans lequel le procédé comprend en outre :
l'enregistrement, par la chaîne de blocs d'identité globale, d'un rapport de vol qui est reçu à partir de la chaîne de blocs de sécurité par segment, dans lequel le rapport de vol comprend des informations sur de nouveaux vols pour chacun des voyageurs de la chaîne de blocs de sécurité par segment.

**Fig. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3496332 A

**Non-patent literature cited in the description**

- **LI, A. SFORZIN, ; S. FEDOROV ; G. O. KARAME.** *Proceedings of the ACM Workshop on Blockchain, Cryptocurrencies and Contracts,* 2017

- **LI, A. SFORZIN ; S. FEDOROV ; G. O. KARAME.** Towards scalable and private industrial blockchains. *Proceedings of the ACM Workshop on Blockchain, Cryptocurrencies and Contracts,* 2017